# EUROPEAN PATENT SPECIFICATION

(11) **EP 2 704 487 B1**
(45) Date of publication and mention of the grant of the patent: **27.04.2016**
(21) Application number: 13182180.3
(22) Date of filing: 29.08.2013
(51) Int. Cl.: H04W 36/30

(54) **Improved handover control**
Verbesserte Weiterleitungssteuerung
Commande de transfert intercellulaire améliorée

(30) Priority: 30.08.2012 GB 201215440
(43) Date of publication of application: 05.03.2014
(73) Proprietor: Vodafone IP Licensing Limited, The Connection Newbury Berkshire RG14 2FN (GB)
(72) Inventor: Eldakroury, Mohamed Ahmed, Newbury, Berkshire RG14 2FN (GB)
(74) Representative: Boult Wade Tennant

(56) References cited:
- EP-A2- 1 916 865
- WO-A2-2009/007720
- NOKIA SIEMENS NETWORKS ET AL: "E-UTRA Measurements and Cell Reselection Considerations", 3GPP TSG-RAN WG2 MEETING #58BIS, R2-072386, R2-071727, ORLANDO, USA, vol. R2-072386 ; R2-071727, no. 58BIS, 25 June 2007 (2007-06-25), pages 1-5, XP002500401,

## Description

### Technical Field of the Invention

The present invention relates to a handover controller for an entity in a wireless cellular network, a User Equipment or network entity comprising the handover controller, a method for deciding to initiate handover of a mobile terminal in a wireless cellular network and a computer program.

### Background to the Invention

Handover is a significant feature in all wireless cellular networks, including GSM, UMTS, CDMA2000, LTE and WiMAX. As part of the handover process, a network entity decides to initiate handover of a mobile terminal from one base station (cell) to another base station. Establishing how to make this decision is a consideration for designers of wireless cellular systems.

There are a number of different handover initiation criteria that are known. These criteria often relate to a quality measurement for the wireless link between the serving base station and the mobile terminal and for the wireless link between a non-serving base station and the same mobile terminal. These quality measurements could be a measured carrier to interference plus noise ratio (CINR) or a signal to noise ratio (SNR), for instance.

Of these criteria, a commonly used handover initiation criterion employs thresholds and relative link quality with hysteresis. This requires two parameters. The first parameter is a threshold quality level, which is compared with the link quality between the mobile terminal and each base station (serving and non-serving). The second parameter is called a hysteresis parameter. The difference between the link quality for the link between the mobile terminal and the serving base station and the link quality for the link between the mobile terminal and the non-serving base station is compared with the hysteresis parameter.

Thus, when (i) the link quality between the serving base station and the mobile terminal decreases below the threshold quality level, (ii) the link quality between a non-serving base station and the mobile terminal is at least the threshold quality level and (iii) the difference between the link quality between the mobile terminal and the serving base station and the link quality between the mobile terminal and the non-serving base station is greater than or equal to the hysteresis parameter, handover to the non-serving base station is initiated. This three-step test consequently represents a single handover criterion.

The choice of threshold quality level and hysteresis parameter is therefore significant in the configuration of the system. A design compromise is often necessitated. Setting the threshold too high, the hysteresis parameter too low or both can result in handover being initiated on a frequent basis. This may result in the mobile terminal switching back and forth for service between two base stations repeatedly, often with intervals of ten seconds or less. Such an effect is sometimes referred to as a 'ping-pong' situation and may be an inefficient configuration of the system and wasteful of capacity. At the opposite end of the spectrum, setting the threshold too low, the hysteresis parameter too high or both can result in the link quality between the mobile terminal and the serving base station degrading to such an extent that a guaranteed service level cannot be maintained. For example, when the mobile terminal is travelling between the coverage areas of two adjacent base stations, service quality may be adequate when the mobile terminal is towards the centre of the first base station's coverage area and then may drop to an unacceptable level as the mobile terminal reaches the edge of the first base station's coverage area. Finally, once the mobile terminal travels towards the centre of the coverage area of the second base station, handover is initiated and service quality reaches an acceptable level again. This leads to a poor continuity of service and a degraded user experience.

There are known approaches for addressing this compromise. EP-1734779 measures a signal intensity of the serving base station. If that meets a reference value, no handover results. Otherwise, pilot signal intensity measurements are made for non-serving neighbour base stations and if any of these are greater than the measurement for the serving base station, handover is requested. If not, the reference value can be reduced. The reference value can also be increased if the measured signal intensity is greater than the reference value. This approach does not provide a guaranteed minimum signal intensity when initiating handover. As a result, the quality of service upon handover may be impacted.

WO-2012/045337 suggests acquiring a location for the mobile terminal and adjusting the handover initiation criterion based on that location. This involves additional technology, signalling or both. US-8,060,095 considers adjusting the handover criterion for each base station. This is intended to balance the loads placed on different base stations, that is to encourage handover to base stations with lower loads. It can also account for radio frequency environmental factors. In any event, each base station still retains a single criterion comprising a threshold parameter and a hysteresis parameter.

Even with these approaches, the 'ping-pong' situation is still possible. Mitigating this situation without significantly adding to the complexity of the network and system remains a challenge.

WO-2009/007720 relates to a base station reselection method for a mobile terminal camped on a base station. A different priority is accorded to respective radio resource types and the reselection parameters are varied in dependence upon the radio resource type of the base station on which the mobile terminal is camped, to cause the mobile terminal to reselect a higher prior radio resource type preferentially when available.

EP-1916865 concerns cell reselection in a dual mode terminal supporting GSM and WCDMA. A cell reselection parameter is measured for a WCDMA cell and a GSM cell when attempting cell reselection from the GSM cell to the WCDMA cell. An additional weight value is determined and this is compared with a cell reselection threshold value and a weight value received from a network.

### Summary of the Invention

Against this background and in a first aspect, the present invention provides a handover controller for an entity in a wireless cellular network, comprising: an input for receiving a first quality value for a wireless link between a mobile terminal and a serving base station and for receiving one or more second quality values, each second quality value being for a wireless link between the mobile terminal and a respective non-serving base station; and control logic, configured to establish a plurality of handover control criteria, to assess the first quality value against a first handover control criterion, to assess each second quality value against the first handover control criterion if the first quality value does not meet the first handover control criterion and to assess the first quality value against a second handover control criterion if all of the one or more second quality values do not meet the first handover control criterion. The first handover control criterion is more stringent than the second handover control criterion. Each of the plurality of handover control criteria define a respective minimum quality level and a respective non-zero hysteresis parameter. The control logic is configured to assess the first quality value against a handover control criterion from the plurality of handover control criteria by determining if the first quality value meets the minimum quality level of the handover control criterion and to assess each second quality value against a handover control criterion from the plurality of handover control criteria by determining if the respective second quality value meets the minimum quality level of the handover control criterion and by identifying if the respective second quality value exceeds the first quality value by a level defined by the hysteresis parameter of the handover control criterion.

In existing configurations, only one phase of decision making takes place. This involves assessing the link quality between the mobile terminal and the serving and each non-serving base station against a handover control criterion only once. Although, the handover control criteria is applied differently to the first quality value as compared with the second quality values. If the link with the serving base station and links with each non-serving base station all fail to meet the handover control criterion, this can often be indicator than no service at all can be provided to the mobile terminal.

In contrast, the present invention carries out a second phase of decision making, if the link with the serving base station and links with each non-serving base station all fail to meet an initial stringent handover control criterion. In this second phase, the link with the serving base station is assessed against at least one less stringent criterion and if the criterion is met (for a specific one of the at least one criterion), no handover need take place. Rather, the mobile terminal may continue to receive service from the currently serving base station.

This second chance for the link between the mobile terminal and the serving base station to meet a handover control criterion and thereby cause handover not to take place improves the existing design compromises. If handover is clearly beneficial to the mobile terminal and this is established through the first handover control criterion, handover will take place using the present invention, as it would have done in existing systems. However, the second phase of decision making means that another criterion can be used to determine whether handover would be beneficial. This can help to avoid 'ping-pong' situations.

Thus, each handover control criterion is used to assess the second quality values with a two-step test, unlike the one-step test for the first quality value. As with the first quality value, the second quality value must here be greater than or equal to the minimum quality level of the handover control criterion. Moreover, the second quality value must also here exceed the first quality value by a level. This level is determined by the hysteresis parameter of the handover control criterion, which is greater than zero, so that the second quality value is assessed more stringently than the first quality value. This further assists in avoiding the 'ping-pong' effect, as it makes a decision to handover less likely.

The minimum quality level of the first handover control criterion may be higher than the minimum quality level of the second handover control criterion. For example, if the first quality value meets the minimum quality level of the first handover control criterion, the first quality value may be considered as meeting the first handover control criterion. This assessment applies only to the first quality value.

The term wireless cellular network is used herein.

This clearly refers to well-established networks and systems such as GSM, UMTS, CDMA2000, LTE. It also refers to systems such as WiFi (based on IEEE 802.11 standards) or WiMax, especially when configured to allow handover between cells or access points. In particular, this term is intended to include any wireless system in which handover between cells may take place.

It is understood that when a link quality meets a handover control criterion means that the link between the mobile terminal and the respective base station is of sufficient quality to support service. Thus, when the link quality for the serving base station meets a handover control criterion, a decision not to handover results. In contrast, when the link quality for a non-serving base station meets a handover control criterion, a decision to handover may result.

Beneficially, the control logic may be further configured not to generate an output signal to initiate handover if the first quality value meets the second handover control criterion. In other words, handover is not initiated if the first quality value relating to the serving base station meets the second handover control criterion. This assessment may only be carried out in cases where neither the first quality value nor any of the second quality values meet the first handover control criterion. Thus, the second handover control criterion acts to prevent handover in cases where the first handover control criterion may be too stringent.

This reduces the 'ping-pong' effect significantly, because it allows multiple handover control criteria to be set to cope with different environments and situations. As a result, handover might only be initiated once there is a greater degree of confidence that the serving base station is not the optimal base station to continue serving the mobile terminal in the current environment. Although the term mobile terminal is used, it will be understood that this could mean a User Equipment, a User Equipment with a Subscriber Identity Module (SIM) or an equivalent device suitable for accessing a wireless cellular network.

The first quality value, at least second quality value or both may be determined by measurement, prediction or both.

There may be only one non-serving base station for which a second quality value is determined. Alternatively, there may be more than one non-serving base station for which a second quality value is determined. In some cases, there may be non-serving base stations for which a link with the mobile terminal exists, but for which no assessment is carried out with respect to a handover control criterion. A limit is advantageously set on the number of second quality value that are determined, assessed or both.

Preferably, the control logic is further arranged to generate an output signal to initiate handover to a selected non-serving base station if the first quality value does not meet the first handover control criterion, but a second quality value for the selected non-serving base station meets the first handover control criterion. In other words, assessment of the first quality value with respect to the second handover control criterion may not always be necessary if the link between the mobile terminal and one of the non-serving base stations has a quality value meeting the first handover criterion.

Optionally, the control logic is further configured to generate an output signal to initiate handover if the first quality value does not meet the second handover control criterion. Handover may be initiated as soon as this assessment is made, but more preferably further assessments are performed before output signal to initiate handover is generated.

In the preferred embodiment, the control logic is further configured to assess the second quality value against the second handover control criterion if the first quality value does not meet the second handover control criterion. Then, the control logic may be further configured to generate an output signal to initiate handover to a selected non-serving base station if the first quality value does not meet the second handover control criterion and a second quality value for the selected non-serving base station meets the second handover control criterion. Hence, the second phase of decision making may continue by assessment of the links between the mobile terminal and the one or more non-serving base station with respect to the second, less stringent handover control criterion.

In embodiments, the control logic is further configured to assess the first quality value against a third handover control criterion if all of the one or more second quality values do not meet the second handover control criterion. Then, the control logic is preferably configured not to generate an output signal to initiate handover if the first quality value meets the third handover control criterion. Thus, a third phase of decision making using a third handover control criterion can be implemented if neither the serving base station nor any of the non-serving base stations meet the second handover control criterion. In these embodiments, the control logic is preferably further configured to assess each second quality value against the third handover control criterion if the first quality value does not meet the third handover control criterion. Additionally, the control logic may be further configured to generate an output signal to initiate handover to a selected non-serving base station if a second quality value for the selected non-serving base station meets the third handover control criterion. Subsequent (fourth, fifth, etc) phases of decision making may be defined, each phase using a respective handover control criterion. A limit may be set on the number of phases (handover control criteria) and if neither the serving base station nor any of the non-serving base stations meet any of the handover control criteria established by the control logic, handover may not be initiated and optionally, the mobile terminal may be detached or disconnected from the wireless cellular network.

Beneficially, the hysteresis parameter of the first handover control criterion is the same as the hysteresis parameter of the second handover control criterion. This may simplify determination of the hysteresis parameters, which may be useful where each mobile terminal determines one or more of the handover control criteria, as it help to provide the same handover control criteria between different mobile terminals without the need for a base station to transmit any more handover control criteria than is necessary. Optionally, the hysteresis parameters of all of the handover control criteria may be the same.

In some embodiments, the control logic is configured to determine the second handover control criterion on the basis of the first handover control criterion. Again, this may be useful where each mobile terminal determines the second handover control criterion. For example, the minimum quality level of the first handover control criterion may be used to determine the minimum quality level of the second handover control criterion. Additionally or alternatively, the hysteresis parameter of the first handover control criterion may be used to determine the hysteresis parameter of the second handover control criterion. Optionally, the control logic is configured to determine any of the plurality of handover control criteria except the first handover control criterion, on the basis of the first handover control criterion.

In the preferred embodiment, the quality value is based upon the received carrier to noise plus interference ratio (CINR) or the received signal to noise ratio (SNR). Other values of quality, such as error rates including bit error rate (BER), block error rate (BLER), packet error rate (PER) may be used in addition or as alternatives.

The wireless cellular network uses a Radio Access Technology comprising at least one of: GSM; EDGE; UMTS; CDMA2000; LTE; and WiMax. Other types of wireless cellular network may also be used, where handover between cells (each cell having a respective base station) is a part of the network configuration.

In a second aspect of the present invention, there is provided a User Equipment (UE) for accessing a wireless cellular network comprising the handover controller as described herein. Preferably, the UE is further configured initiate handover in response to the output signal generated by the control logic. The present invention is applicable to UE-initiated handover, as the UE can take a handover decision based on quality values that it determines or those received from base stations. In some embodiments, the UE is further configured to receive at least part of the first handover control criterion from the serving base station. For example, a minimum quality level for the first handover control criterion may be received from the serving base station or from another base station. Preferably, a minimum quality level and a hysteresis parameter for the first handover control criterion are transmitted (more preferably, broadcast) by a base station. One or more of the handover control criteria may be determined from the first handover control criterion.

In another aspect, the present invention may provide a network entity within a wireless cellular network comprising the handover controller as described herein. The network entity may be a base station, a base station controller or a radio network controller for instance.

In a further aspect, the present invention may be found in a method for deciding to initiate handover of a mobile terminal in a wireless cellular network, comprising: determining a first quality value for a wireless link between a serving base station and the mobile terminal; assessing the first quality value against a first handover control criterion; determining one or more second quality, each second quality value being for a wireless link between the mobile terminal and a respective non-serving base station; assessing each second quality value against the first handover control criterion if the first quality value does not meet the first handover control criterion; and assessing the first quality value against a second handover control criterion if all of the one or more second quality values do not meet the first handover control criterion. The first handover control criterion is more stringent than the second handover control criterion.

It will be understood that this method aspect can optionally comprise steps or features used to carry out any of the actions described in connection with the handover controller detailed above. Also, any combination of the individual apparatus features or method features described may be implemented, even though not explicitly disclosed.

In a yet further aspect, the present invention may be found in a computer program, configured when operated by a processor to carry out the method disclosed herein. Alternatively, the present invention may be embodied in programmable logic, configured upon operation to carry out the method disclosed herein.

### Brief Description of the Drawings

The invention may be put into practice in various ways, one of which will now be described by way of example only and with reference to the accompanying drawings in which:
Figure 1 illustrates a flow diagram showing a process for deciding whether to initiate handover according to an embodiment of the present invention; and
Figure 2 shows a flow diagram of a specific handover initiation process in accordance with the embodiment of Figure 1.

### Detailed description of a Preferred Embodiment

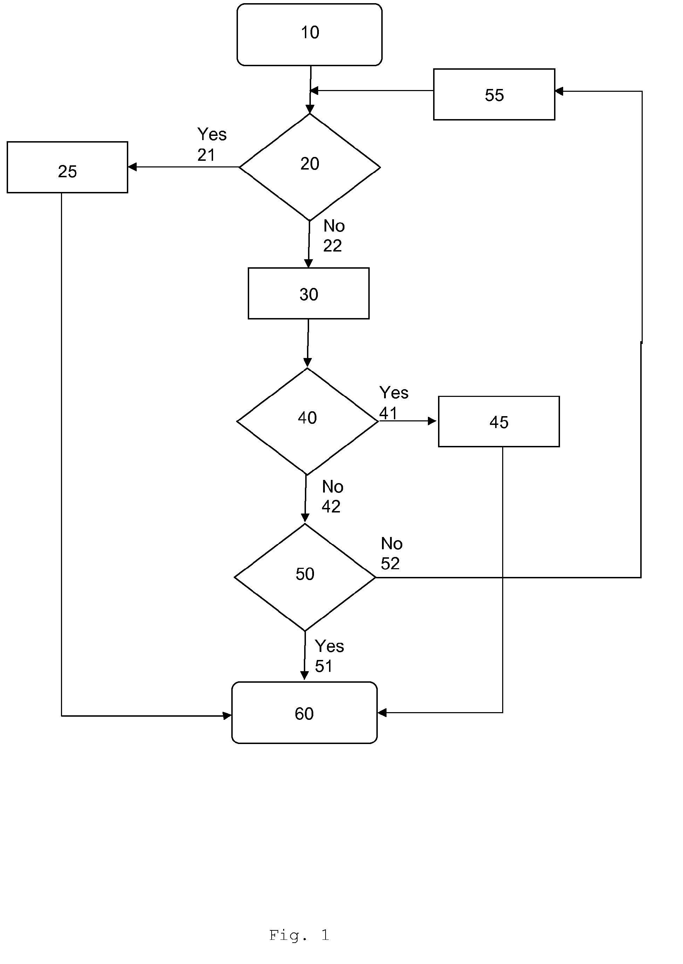

Referring first to Figure 1, there is illustrated a flow diagram showing a process for deciding whether to initiate handover according to an embodiment of the present invention. The process starts at a start procedure 10. A criteria counter k is initiated, such that k=1. The value of k indicates the handover control criterion that is to be used. A total of K (K being at least 2) different handover control criteria are established, such that k = 1 ... K.

At first decision step 20, the link quality for the link between the mobile terminal and the serving base station (Q1) is assessed against the k^{th} handover control criterion. If Q1 meets the k^{th} handover control criterion, then flow 21 is taken and process step 25 is reached. In process step 25, a decision is taken not to initiate handover. The flow then proceeds to end step 60, where the procedure is completed.

If Q1 does not meet the k^{th} handover control criterion, flow 22 is taken and scanning step 30 is reached, in which a link quality for non-serving base stations is determined. A total number of base stations N may be identified. These will include all of the base stations that the mobile terminal can detect, all of the base stations that can detect the mobile terminal or a combination of the two. For the serving base station, n=1. The non-serving base stations are numbered from n=2 to n=N.

The flow diagram then proceeds to handover decision step 40. In handover decision step 40, the link quality for the link between the mobile terminal and each of the n^{th} non-serving base stations (Qₙ) for n=2, ..., N is assessed against the k^{th} handover control criterion. If the k^{th} handover control criterion is met for any of these, then flow 41 is taken to carry out process step 45. In process step 45, a decision is then taken to handover to one of the non-serving base stations that meets the k^{th} handover control criterion. This will normally be the optimal choice, that is, the base station with the best link quality that also meets the k^{th} handover control criterion. The flow then proceeds to end step 60, where the procedure is completed. If Qₙ does not meet the k^{th} handover control criterion, flow 42 is taken instead. The process then continues to decision step 50.

In decision step 50, it is identified whether k=K. If so, then the process continues to end step 60 and no handover is initiated. If not, flow 52 is taken and the process proceeds to process step 65. In process step 55, k is increased by 1, such that k=k+1. Then, the process returns to decision step 20 and the first base station (and possibly other non-serving base stations) is assessed against the next handover control criterion.

The handover control criteria have not been defined above. Different handover control criteria may be used, but the preferred criteria use two parameters: a threshold (or minimum) quality level; and a hysteresis parameter. The handover control criteria in respect of the first base station are simply a comparison of Q₁ with a minimum quality level (Tₖ). This is a threshold level for the quality, such that decision step 20 may be understood as determining whether Q₁ ≥ Tₖ.

For the non-serving base stations (n>1), the handover control criteria may be different. Firstly, Qₙ is compared with the minimum quality level, such that Qₙ ≥ Tₖ. Moreover, the hysteresis parameter (Hₖ) is used. It is determined whether Qₙ exceeds Q₁ by the hysteresis parameter, such that Qₙ ≥ Q₁+Hₖ. Thus, decision step 40 consists of an assessment of both of Qₙ ≥ Tₖ and Qₙ ≥ Q₁+Hₖ.

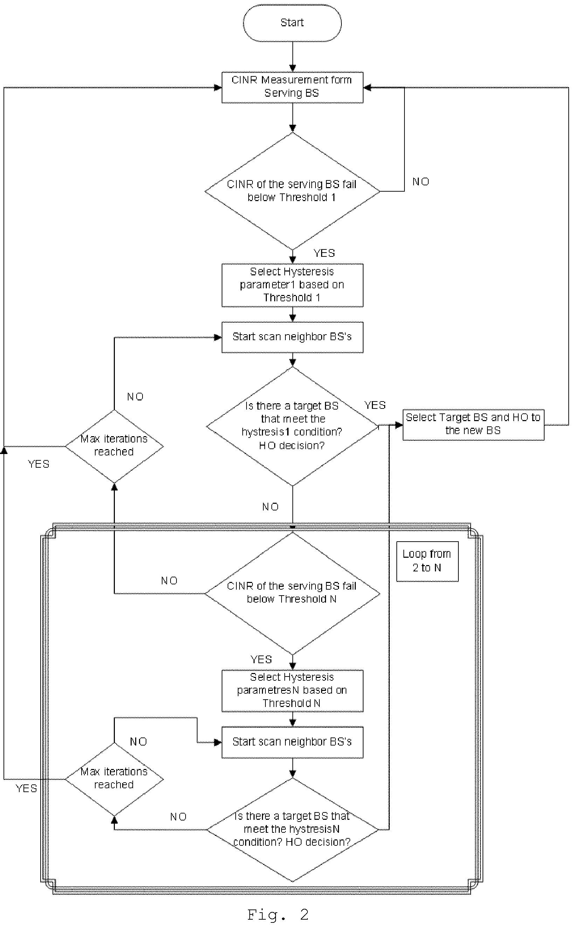

Referring next to Figure 2, there is shown a flow diagram of a specific handover initiation process. This process is essentially the same as shown in Figure 1, when using the minimum quality level and hysteresis parameter approach described above.

Although an embodiment of the invention have been described above, the skilled person may contemplate various modifications or substitutions. For example, instead of a minimum quality level and hysteresis parameter, different parameters can be used for assessment of the link quality, such as a simple threshold quality level (without a hysteresis parameter). Additionally or alternatively, just a relative comparison of the link quality for the serving and non-serving base stations. If no threshold is used (just a relative comparison), a hysteresis parameter may be used. Moreover, the parameters used for different base stations may be different, as disclosed in US-8,060,095. This can still be considered the same handover criterion, even though the parameters vary.

Prediction techniques may also be employed to determine a future value for the link qualities, rather than using a measured value.

## Claims

1. A handover controller for an entity in a wireless cellular network, comprising:
an input for receiving a first quality value for a wireless link between a mobile terminal and a serving base station and for receiving one or more second quality values, each second quality value being for a wireless link between the mobile terminal and a respective non-serving base station; and
control logic, configured to establish a plurality of handover control criteria, to assess (20) the first quality value against a first handover control criterion, to assess (40) each second quality value against the first handover control criterion if the first quality value does not meet the first handover control criterion and to assess the first quality value against a second handover control criterion if all of the one or more second quality values do not meet the first handover control criterion; and
wherein each of the plurality of handover control criteria define a respective minimum quality level and a respective non-zero hysteresis parameter, the first handover control criterion is more stringent than the second handover control criterion and wherein the control logic is configured to assess the first quality value against a handover control criterion from the plurality of handover control criteria by determining if the first quality value meets the minimum quality level of the handover control criterion and to assess each second quality value against a handover control criterion from the plurality of handover control criteria, by determining if the respective second quality value meets the minimum quality level of the handover control criterion and by identifying if the respective second quality value exceeds the first quality value by a level defined by the hysteresis parameter of the handover control criterion.

2. The handover controller of claim 1, wherein the control logic is further arranged to generate an output signal to initiate handover to a selected non-serving base station if the first quality value does not meet the first handover control criterion and a second quality value for the selected non-serving base station meets the first handover control criterion.

3. The handover controller of claim 1 or claim 2, wherein the control logic is further configured to generate an output signal to initiate handover if the first quality value does not meet the second handover control criterion and not to generate an output signal to initiate handover if the first quality value meets the second handover control criterion.

4. The handover controller of any preceding claim, wherein the control logic is further configured to assess the second quality value against the second handover control criterion if the first quality value does not meet the second handover control criterion and to generate an output signal to initiate handover to a selected non-serving base station if the first quality value does not meet the second handover control criterion and a second quality value for the selected non-serving base station meets the second handover control criterion.

5. The handover controller of claim 4, wherein the control logic is further configured to assess the first quality value against a third handover control criterion if all of the one or more second quality values do not meet the second handover control criterion and not to generate an output signal to initiate handover if the first quality value meets the third handover control criterion.

6. The handover controller of any preceding claim, wherein the control logic is further configured to detach or disconnect the mobile terminal from the wireless cellular network if each of the first quality value and one or more second quality values meet any of the plurality of handover control criteria.

7. The handover controller of any preceding claim, wherein the hysteresis parameter of the first handover control criterion is the same as the hysteresis parameter of the second handover control criterion.

8. The handover controller of any preceding claim, wherein the control logic is configured to determine the second handover control criterion on the basis of the first handover control criterion.

9. The handover controller of any preceding claim, wherein the quality value is based upon the received carrier to noise plus interference ratio or the received signal to noise ratio.

10. The handover controller of any preceding claim, wherein the wireless cellular network uses a Radio Access Technology comprising at least one of: GSM; EDGE; UMTS; CDMA2000; LTE; and WiMax.

11. A User Equipment for accessing a wireless cellular network comprising the handover controller of any preceding claim and further configured to initiate handover in response to the output signal generated by the control logic.

12. The User Equipment of claim 11, further configured to receive at least part of the first handover control criterion from the serving base station.

13. A method for deciding to initiate handover of a mobile terminal in a wireless cellular network, comprising:
determining a first quality value for a wireless link between a serving base station and the mobile terminal;
assessing (20) the first quality value against a first handover control criterion;
determining one or more second quality , each second quality value being for a wireless link between the mobile terminal and a respective non-serving base station;
assessing (40) each second quality value against the first handover control criterion if the first quality value does not meet the first handover control criterion; and
assessing the first quality value against a second handover control criterion if all of the one or more second quality values do not meet the first handover control criterion; and
wherein each of the plurality of handover control criteria define a respective minimum quality level and a respective non-zero hysteresis parameter, the first handover control criterion is more stringent than the second handover control criterion; and
wherein the step of assessing the first quality value against a handover control criterion from the plurality of handover control criteria comprises determining if the first quality value meets the minimum quality level of the handover control criterion and assessing each second quality value against a handover control criterion from the plurality of handover control criteria comprises determining if the respective second quality value meets the minimum quality level of the handover control criterion and identifying if the respective second quality value exceeds the first quality value by a level defined by the hysteresis parameter of the handover control criterion.

14. The method of claim 13, wherein the hysteresis parameter of the first handover control criterion is the same as the hysteresis parameter of the second handover control criterion.

15. A computer program, configured to carry out the method of claim 13 or claim 14 when operated by a processor.

## Patentansprüche

1. Übergabe-Controller für eine Einheit in einem drahtlosen zellulären Netzwerk, der Folgendes umfasst:
einen Eingang zum Empfangen eines ersten Qualitätswertes für eine drahtlose Verbindung zwischen einem mobilen Endgerät und einer bedienenden Basisstation und zum Empfangen von einem oder mehreren zweiten Qualitätswerten, wobei sich jeder zweite Qualitätswert auf eine drahtlose Verbindung zwischen dem mobilen Endgerät und einer jeweiligen nicht bedienenden Basisstation bezieht; und
Steuerlogik, konfiguriert zum Aufstellen einer Mehrzahl von Übergabesteuerkriterien zum Beurteilen (20) des ersten Qualitätswertes anhand eines ersten Übergabesteuerkriteriums, zum Beurteilen (40) jedes zweiten Qualitätswertes anhand des ersten Übergabesteuerkriteriums, wenn der erste Qualitätswert das erste Übergabesteuerkriterium nicht erfüllt, und zum Beurteilen des ersten Qualitätswertes anhand eines zweiten Übergabesteuerkriteriums, wenn alle der ein oder mehreren zweiten Qualitätswerte das erste Übergabesteuerkriterium nicht erfüllen; und
wobei jedes aus der Mehrzahl von Übergabesteuerkriterien ein jeweiliges Mindestqualitätsniveau und einen jeweiligen Hystereseparameter von ungleich null definiert, wobei das erste Übergabesteuerkriterium strenger ist als das zweite Übergabesteuerkriterium und wobei die Steuerlogik zum Beurteilen des ersten Qualitätswertes anhand eines Übergabesteuerkriteriums aus der Mehrzahl von Übergabesteuerkriterien konfiguriert ist, durch Ermitteln, ob der erste Qualitätswert das Mindestqualitätsniveau des Übergabesteuerkriteriums erfüllt, und um jeden zweiten Qualitätswert anhand eines Übergabesteuerkriteriums aus der Mehrzahl von Übergabesteuerkriterien zu beurteilen, durch Feststellen, ob der jeweilige zweite Qualitätswert das Mindestqualitätsniveau des Übergabesteuerkriteriums erfüllt, und durch Identifizieren, ob der jeweilige zweite Qualitätswert den ersten Qualitätswert um ein durch den Hystereseparameter des Übergabesteuerkriteriums definiertes Niveau übersteigt.

2. Übergabe-Controller nach Anspruch 1, wobei die Steuerlogik ferner zum Erzeugen eines Ausgangssignals ausgelegt ist, um eine Übergabe an eine gewählte nicht bedienende Basisstation einzuleiten, wenn der erste Qualitätswert das erste Übergabesteuerkriterium nicht erfüllt und ein zweiter Qualitätswert für die gewählte nicht bedienende Basisstation das erste Übergabesteuerkriterium erfüllt.

3. Übergabe-Controller nach Anspruch 1 oder Anspruch 2, wobei die Steuerlogik ferner zum Erzeugen eines Ausgangssignals konfiguriert ist, um eine Übergabe einzuleiten, wenn der erste Qualitätswert das zweite Übergabesteuerkriterium nicht erfüllt, und kein Ausgangssignal zum Einleiten einer Übergabe zu erzeugen, wenn der erste Qualitätswert das zweite Übergabesteuerkriterium erfüllt.

4. Übergabe-Controller nach einem vorherigen Anspruch, wobei die Steuerlogik ferner zum Beurteilen des zweiten Qualitätswertes anhand des zweiten Übergabesteuerkriteriums, wenn der erste Qualitätswert das zweite Übergabesteuerkriterium nicht erfüllt, und zum Erzeugen eines Ausgangssignals konfiguriert ist, um die Übergabe an eine gewählte nicht bedienende Basisstation einzuleiten, wenn der erste Qualitätswert das zweite Übergabesteuerkriterium nicht erfüllt und ein zweiter Qualitätswert für die gewählte nicht bedienende Basisstation das zweite Übergabesteuerkriterium erfüllt.

5. Übergabe-Controller nach Anspruch 4, wobei die Steuerlogik ferner zum Beurteilen des ersten Qualitätswertes anhand eines dritten Übergabesteuerkriteriums, wenn alle der ein oder mehreren zweiten Qualitätswerte das zweite Übergabesteuerkriterium nicht erfüllen, und zum Erzeugen keines Ausgangssignals konfiguriert ist, um eine Übergabe einzuleiten, wenn der erste Qualitätswert das dritte Übergabesteuerkriterium erfüllt.

6. Übergabe-Controller nach einem vorherigen Anspruch, wobei die Steuerlogik ferner zum Wegnehmen oder Abtrennen des mobilen Endgeräts von dem drahtlosen zellulären Netzwerk konfiguriert ist, wenn jeder erste Qualitätswert und einer oder mehrere zweite Qualitätswerte eines der mehreren Übergabesteuerkriterien erfüllen.

7. Übergabe-Controller nach einem vorherigen Anspruch, wobei der Hystereseparameter des ersten Übergabesteuerkriteriums derselbe ist wie der Hystereseparameter des zweiten Übergabesteuerkriteriums.

8. Übergabe-Controller nach einem vorherigen Anspruch, wobei die Steuerlogik zum Feststellen des zweiten Übergabesteuerkriteriums auf der Basis des ersten Übergabesteuerkriteriums konfiguriert ist.

9. Übergabe-Controller nach einem vorherigen Anspruch, wobei der Qualitätswert auf dem empfangenen Träger/Rauschen-plus-Interferenz-Verhältnis oder dem empfangenen Signal-Rausch-Verhältnis basiert.

10. Übergabe-Controller nach einem vorherigen Anspruch, wobei das drahtlose zelluläre Netzwerk eine Funkzugangstechnologie benutzt, die wenigstens eine der Folgenden umfasst: GSM; EDGE; UMTS; CDMA2000; LTE und WiMax.

11. Benutzergerät zum Zugreifen auf ein drahtloses zelluläres Netzwerk, das den Übergabe-Controller nach einem vorherigen Anspruch umfasst und ferner zum Einleiten einer Übergabe als Reaktion auf das von der Steuerlogik erzeugte Ausgangssignal konfiguriert ist.

12. Benutzergerät nach Anspruch 11, das ferner zum Empfangen wenigstens eines Teils des ersten Übergabesteuerkriteriums von der bedienenden Basisstation konfiguriert ist.

13. Verfahren zum Entscheiden, die Übergabe eines mobilen Endgeräts in einem drahtlosen zellulären Netzwerk einzuleiten, das Folgendes beinhaltet:
Feststellen eines ersten Qualitätswertes für eine drahtlose Verbindung zwischen einer bedienenden Basisstation und dem mobilen Endgerät;
Beurteilen (20) des ersten Qualitätswertes anhand eines ersten Übergabesteuerkriteriums;
Feststellen von einer oder mehreren zweiten Qualitätswerten, wobei sich jeder Qualitätswert auf eine drahtlose Verbindung zwischen dem mobilen Endgerät und einer jeweiligen nicht bedienenden Basisstation bezieht;
Beurteilen (40) jedes zweiten Qualitätswertes anhand des ersten Übergabesteuerkriteriums, wenn der erste Qualitätswert das erste Übergabesteuerkriterium nicht erfüllt; und
Beurteilen des ersten Qualitätswertes anhand eines zweiten Übergabesteuerkriteriums, wenn alle der ein oder mehreren zweiten Qualitätswerte das erste Übergabesteuerkriterium nicht erfüllen; und
wobei jedes der mehreren Übergabesteuerkriterien ein jeweiliges Mindestqualitätsniveau und einen jeweiligen Hystereseparameter von ungleich null definiert, wobei das erste Übergabesteuerkriterium strenger ist als das zweite Übergabesteuerkriterium; und
wobei der Schritt des Beurteilens des ersten Qualitätswertes anhand eines Übergabesteuerkriteriums aus der Mehrzahl von Übergabesteuerkriterien das Feststellen beinhaltet, ob der erste Qualitätswert das Mindestqualitätsniveau des Übergabesteuerkriteriums erfüllt, und das Beurteilen jedes zweiten Qualitätswertes anhand eines Übergabesteuerkriteriums aus den mehreren Übergabesteuerkriterien das Feststellen, ob der jeweilige zweite Qualitätswert das Mindestqualitätsniveau des Übergagbesteuerkriteriums erfüllt, und das Identifizieren beinhaltet, ob der jeweilige zweite Qualitätswert den ersten Qualitätswert um ein Niveau übersteigt, das durch den Hystereseparameter des Übergabesteuerkriteriums definiert wird.

14. Verfahren nach Anspruch 13, wobei der Hystereseparameter des ersten Übergabesteuerkriteriums derselbe ist für den Hystereseparameter des zweiten Übergabesteuerkriteriums.

15. Computerprogramm, konfiguriert zum Ausführen des Verfahrens nach Anspruch 13 oder Anspruch 14, wenn es von einem Prozessor abgearbeitet wird.

## Revendications

1. Contrôleur de transfert pour entité dans un réseau cellulaire sans fil, comprenant:
une entrée pour la réception d'une première valeur de qualité pour liaison sans fil entre un terminal mobile et une station de base de desserte et pour recevoir une ou plusieurs deuxièmes valeurs de qualité, chaque deuxième valeur de qualité étant prévue pour une liaison sans fil entre le terminal mobile et une station de base de non-desserte respective; et
une logique de commande configurée pour établir une pluralité de critères de contrôle de transfert, pour évaluer (20) la première valeur de qualité à l'aune d'un premier critère de contrôle de transfert, pour évaluer (40) chaque deuxième valeur de qualité à l'aune du premier critère de contrôle de transfert si la première valeur de qualité ne satisfait pas au premier critère de contrôle de transfert et pour évaluer la première valeur de qualité à l'aune d'un deuxième critère de contrôle de transfert si toutes les deuxièmes valeurs de qualité ne satisfont pas au premier critère de contrôle de transfert; et
où chacune de la pluralité des critères de contrôle de transfert définit un niveau de qualité minimal respectif et un paramètre d'hystérésis respectif différent de zéro, le premier critère de contrôle de transfert est plus rigoureux que le deuxième critère de contrôle de transfert et où la logique de commande est configurée pour évaluer la première valeur de qualité à l'aune d'un critères de contrôle de transfert parmi la pluralité de critères de contrôle de transfert en déterminant si la première valeur de qualité satisfait au niveau de qualité minimal du critère de contrôle de transfert et pour évaluer chaque deuxième valeur de qualité à l'aune d'un critère de contrôle de transfert parmi la pluralité de critères de contrôle de transfert et en déterminant si la deuxième valeur de qualité respective satisfait au niveau de qualité minimal du critère de contrôle de transfert et en identifiant si la deuxième valeur de qualité respective dépasse la première valeur de qualité par un niveau défini par le paramètre d'hystérésis du critère de contrôle de transfert.

2. Contrôleur de transfert selon la revendication 1, où la logique de commande est en outre organisée pour générer un signal de sortie pour déclencher le transfert vers une station de base de non-desserte sélectionnée si la première valeur de qualité ne satisfait pas au premier critère de contrôle de transfert et une deuxième valeur de qualité pour la station de base de non-desserte sélectionnée satisfait au premier critère de contrôle de transfert.

3. Contrôleur de transfert selon la revendication 1 ou la revendication 2, où la logique de commande est en outre organisée pour générer un signal de sortie pour déclencher le transfert si la première valeur de qualité ne satisfait pas au deuxième critère de contrôle de transfert et pour ne pas générer de signal de sortie pour déclencher le transfert si la première valeur de qualité satisfait au deuxième critère de contrôle de transfert.

4. Contrôleur de transfert selon l'une quelconque des revendications précédentes, où la logique de commande est configurée en outre pour évaluer la deuxième valeur de qualité à l'aune du deuxième critère de contrôle de transfert si la première valeur de qualité ne satisfait pas au deuxième critère de contrôle de transfert et pour générer un signal de sortie pour déclencher le transfert vers une station de base de non-desserte si la première valeur de qualité ne satisfait pas au deuxième critère de contrôle de transfert et une deuxième valeur de qualité pour la station de base de non-desserte sélectionnée satisfait au deuxième critère de contrôle de transfert.

5. Contrôleur de transfert selon la revendication 4, où la logique de commande est configurée en outre pour évaluer la première valeur de qualité à l'aune du troisième critère de contrôle de transfert si toutes les deuxièmes valeurs de qualité ne satisfont pas au deuxième critère de contrôle de transfert et pour ne pas générer un signal de sortie pour déclencher le transfert si la première valeur de qualité satisfait au troisième critère de contrôle de transfert.

6. Contrôleur de transfert selon l'une quelconque des revendications précédentes, où la logique de commande est configurée en outre pour séparer ou débrancher le terminal mobile du réseau cellulaire sans fil si chacune de la première valeur de qualité et une ou plusieurs deuxièmes valeurs de qualité satisfont à l'une de la pluralité des critères de contrôle de transfert.

7. Contrôleur de transfert selon l'une quelconque des revendications précédentes, où le paramètre d'hystérésis de la première commande de transfert critère est le même que le paramètre d'hystérésis du deuxième critère de contrôle de transfert.

8. Contrôleur de transfert selon l'une quelconque des revendications précédentes, où la logique de commande est configurée pour déterminer le deuxième critère de contrôle de transfert sur la base du premier critère de contrôle de transfert.

9. Contrôleur de transfert selon l'une quelconque des revendications précédentes, où la valeur de la qualité est fondée sur le rapport entre la porteuse reçue et le bruit plus interférence ou bien le rapport entre le signal reçu et le bruit.

10. Contrôleur de transfert selon l'une quelconque des revendications précédentes, où le réseau cellulaire sans fil utilise une technologie d'accès radio comprenant au moins l'un de : GSM; EDGE; UMTS; CDMA2000; LTE; et WiMax.

11. Equipement utilisateur pour accéder à un réseau cellulaire sans fil comprenant le contrôleur de transfert selon toute revendication précédente et configuré en outre pour déclencher le transfert en réponse au signal de sortie généré par la logique de commande.

12. Equipement utilisateur selon la revendication 11, configuré en outre de manière à recevoir au moins une partie du premier critère de contrôle de transfert à partir de la station de base de desserte.

13. Procédé permettant de décider de déclencher le transfert d'un terminal mobile à un réseau cellulaire sans fil, comprenant:
la détermination d'une première valeur de qualité pour liaison sans fil entre une station de base de desserte et le terminal mobile;
l'évaluation (20) de la première valeur de qualité à l'aune d'un premier critère de contrôle de transfert;
la détermination d'une ou plusieurs deuxième qualité, chaque deuxième valeur de qualité étant prévue pour une liaison sans fil entre le terminal mobile et une station de base de non-desserte respective;
l'évaluation (40) de chaque deuxième valeur de qualité à l'aune du premier critère de contrôle de transfert si la première valeur de qualité ne satisfait pas au premier critère de contrôle de transfert; et
l'évaluation de la première valeur de qualité à l'aune d'un deuxième critère de contrôle de transfert si toutes les deuxièmes valeurs de qualité ne satisfont pas au premier critère de contrôle de transfert; et
où chacune de la pluralité des critères de contrôle de transfert définit un niveau de qualité minimal respectif et un paramètre d'hystérésis respectif différent de zéro, le premier critère de contrôle de transfert est plus rigoureux que le deuxième critère de contrôle de transfert; et
et où l'étape d'évaluation de la première valeur de qualité à l'aune d'un critère de contrôle de transfert parmi la pluralité de critères de contrôle de transfert consiste à déterminer si la première valeur de qualité satisfait au niveau de qualité minimal du critère de contrôle de transfert et l'étape d'évaluation de chaque deuxième valeur de qualité à l'aune d'un critère de contrôle de transfert parmi la pluralité de critères de contrôle de transfert consiste à déterminer si la deuxième valeur de qualité respective satisfait au niveau de qualité minimal du critère de contrôle de transfert et l'étape d'identification si la deuxième valeur de qualité respective dépasse la première valeur de qualité par un niveau défini par le paramètre d'hystérésis du critère de contrôle de transfert.

14. Procédé selon la revendication 13, où le paramètre d'hystérésis de la première commande de transfert critère est le même que le paramètre d'hystérésis du deuxième critère de contrôle de transfert.

15. Programme d'ordinateur, configuré pour réaliser le procédé selon la revendication 13 ou la revendication 14 une fois commandé par un processeur.
